# EUROPEAN PATENT APPLICATION

(11) **EP 1 857 171 A2**
(43) Date of publication of application: **21.11.2007**
(21) Application number: 07251990.3
(22) Date of filing: 15.05.2007
(51) Int. Cl.: B01D 61/04, C02F 1/44, B01J 19/10, B06B 1/02, C02F 1/04, C02F 1/36, C02F 1/00, C02F 103/08

(54) **Seawater desalination system with sonic energy pretreatment.**

(30) Priority: 16.05.2006 CN 200610080442
(71) Applicant: XU, Xiaoning, Hai Dian District Beijing 100089 (CN)
(72) Inventor: Xu, Xiaoning, Hai Dian District, Beijing 100089 (CN); Ji, Ming, Hai Dian District, Beijing 100089 (CN)
(74) Representative: Hedges, Martin Nicholas

(57) **Abstract**

The present invention relates to a seawater desalination system which comprises a filter apparatus, a sonic energy treatment apparatus, and a desalination apparatus. After being coarse-filtered and fine-filtered, the seawater enters the sonic energy treatment apparatus. After being treated by the sonic energy treatment apparatus, the seawater is stored in a water storage tank and then pumped into a reverse osmosis membrane. After osmosis, the water becomes freshwater and stored in a freshwater tank. The reverse osmosis membrane can be replaced by a distillatory. The present invention has the advantages of a simple structure of the seawater desalination apparatus, less investment, low cost, and stable performance. The seawater is not only desalinated, but also chain-shortened into water of small molecular clusters, which is easily absorbed and utilized by human body.

## Description

The present invention relates to a seawater desalination apparatus. More particularly, the present invention relates to a seawater desalination apparatus by using a jet technique, which falls in a technical field of the International Patent Classification C02F1/00 "water, wastewater, sewage treatment."

### Description of the Prior Art

Currently, various methods for seawater desalination have been applied at home and abroad, including phase-changing, evaporation, distillation, cooling, membrane separation, reverse osmosis, electro-dialysis, chemical equilibrium, ionexchange, hydration, solvent extraction, and so on. Recently, flash-evaporation takes the leading role, which occupies about 70% of the total production of the desalinated seawater. However, flash-evaporation has the disadvantages of a high investment in apparatuses, a large seawater circulation, a small water production, a low concentration ratio, and a high operation cost.

### Summary of the Invention

Accordingly, the present invention is directed to a novel seawater desalination system using a jet technique, to overcome the disadvantages of the prior art.

The object of the present invention is achieved by the following technical solutions.

The present invention provides a seawater desalination system using the jet technique, which comprises a filter apparatus, a sonic energy treatment apparatus, and a desalination apparatus. The filter apparatus includes: a seawater collecting port, connected to a seawater bump; a seawater bump connected to a coarse filter apparatus; and a fine filter apparatus connected to the coarse filter apparatus. After the fine filtering process, the seawater enters into the sonic energy treatment apparatus. According to actual requirements, the sonic energy treatment apparatus can include two to multiple stages. After being treated by the sonic energy treatment apparatus, the seawater exists in the form of small molecular clusters and stored in a water storage tank, and then bumped to a reverse osmosis membrane. Then, after osmosis, the water becomes freshwater and stored in a freshwater tank.

In another solution of the present invention, the reverse osmosis membrane of the above solution is replaced by a distillatory, and the freshwater distilled from the distillatory is stored in a freshwater tank.

The sonic energy treatment apparatus is mainly a hydrodynamic sonic energy generator, which is a metal chamber composed of a middle chamber, and an upper and a lower axial chamber; an upper and a lower end surface of the upper and lower chambers have two coaxial outlets disposed on the axel center, and the middle chamber has inlets uniformly distributed thereon. The middle chamber has 4-40 inlets distributed thereon, which are inclined holes in the moving direction of the fluid, and the angle between an axis of the inlets and a tangent line of the excircle is 30°-90°. The aperture ratio of the inlets to the outlets is in the range of 100:1 - 100:20. The ratio of the root diameter of the upper axial chamber for the hydrodynamic sonic energy generator to the diameter of the middle chamber is in the range of 1:1 - 1:5.

The present invention has the advantages of a simple structure, less investment on the apparatuses, low cost, and stable performance. The seawater is not only desalinated, but also chain-shortened into water of small molecular clusters, which is easily absorbed and utilized by human body.

### Brief description of the drawings

FIG. 1 is a schematic view of a combination of apparatuses for a seawater desalination system according to the present invention; and
Figs. 2 and 3 are schematic structural views of an inner chamber of a sonic energy generator in the sonic energy treatment apparatus.

### List of Reference Numerals

- 1: Seawater collecting port
- 2: Seawater bump
- 3: Coarse filter apparatus
- 4: Fine filter apparatus
- 5: Air compressor
- 6: Sonic energy treatment apparatus
- 7: Small molecular seawater storage tank
- 8: Pump
- 9: Reverse osmosis membrane
- 10: Freshwater tank
- 11: Hydrodynamic sonic energy generator

### Detailed Description

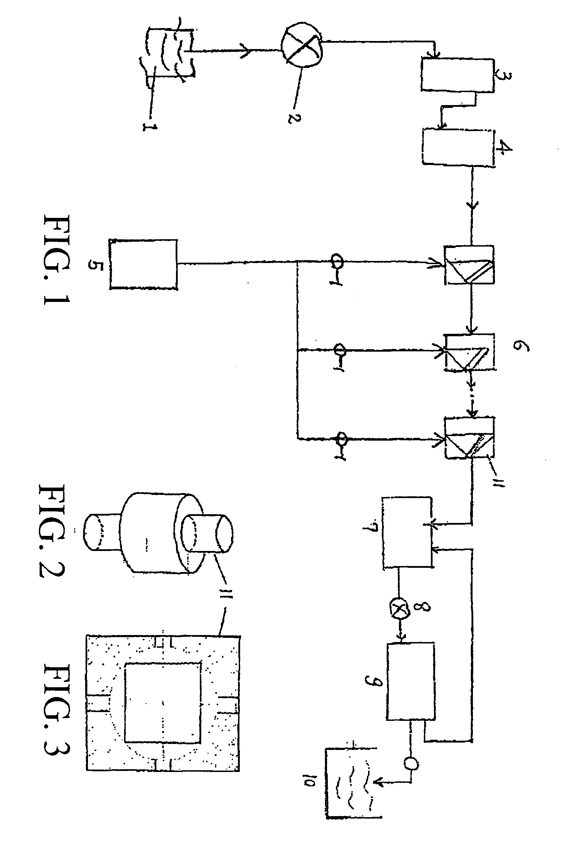

As shown in FIG 1, seawater to be desalinated is sent to a coarse filter apparatus 3 from a seawater collecting port 1 by a seawater pump 2. After a preliminary filtering process, various impurities are filtered off. After passing the coarse filter, the seawater enters a fine filter apparatus 4 for performing germicidal treatment and so on, and then enters a sonic energy treatment apparatus 6. Then, air is sent into a hydrodynamic sonic energy generator 11 by an air compressor 5. Then, after two-stage (or multi-stage) oscillating and jetting treatment, the seawater was processed into refined small molecular seawater, and stored in a small molecular seawater storage tank 7, and then sent to a reverse osmosis membrane 9 by a pump 8. After the reverse osmosis treatment, the salt is removed, and the small molecular seawater becomes freshwater and stored in a freshwater tank 10 for being used. (The coarse filter apparatus and the fine filter apparatus are apparatus applied in the conventional art).

As shown in FIG. 2, the hydrodynamic sonic energy generator 11 is a metal chamber, which includes a middle chamber, and an upper and a lower axial chamber; an upper and a lower end surface of the upper and lower chambers have two coaxial outlets disposed in the axis, and the middle chamber has inlets uniformly distributed thereon. The middle chamber has 4-40 inlets distributed thereon, which are inclined holes in the moving direction of the fluid, and the angle between an axis of the inlets and a tangent line of the excircle is 30°-90°. The aperture ratio of the inlets to the outlets is in the range of 100:1 - 100:20. The ratio of the root diameter of the upper axial chamber for the hydrodynamic sonic energy generator 11 to the diameter of the middle chamber is in the range of 1:1 - 1:5. The frequency of the generator is 100 Hz-300,000 Hz, and the sound intensity is greater than 100 dB. The pressure of the hydraulic pump is 0.2 MPa-80 MPa, and the power of the hydraulic pump is 2 KW-500 KW.

The jet technique of the present invention is a hydrodynamic sonic energy processing technique, and the principle is described as follows. The procedure of the hydrodynamic sonic energy processing can be briefly described as: according to various solid, liquid, and gas materials to be processed and various processing purposes, a specific hydrodynamic medium, specific sound frequency, specific sound intensity, specific sound field distribution, and other processing conditions are selected. The material to be processed is processed under these conditions, so that corresponding mechanical effect, thermal effect, chemical effect, biological effect, or changes caused by the above effects occur in the material, so as to achieve the purpose of sonic energy processing.

"The hydrodynamic sonic energy generator generates audible sounds and ultrasounds by adjusting the liquid or high-speed gas with fluids as the power source, which has the unique advantages of a simple structure, low cost, large handling capacity, convenient operation, and desirable durability 7", and more importantly, it still has the advantages of "a low energy consumption, and a convenient power source, so that it is suitable for being used in industrial applications 8". Though the hydrodynamic sonic energy generator theoretically has the above seven advantages, in order to develop a system for preparing water-coal slurry through a hydrodynamic sonic energy technique as the present invention, it is necessary to shorten the distance from the theoretical possibility to the technical reality.

Currently, the hydrodynamic sonic energy generator has shown unique advantages in industrial applications, and has exhibited its powerful vitality. However, due to various factors, relevant mathematical treatments are very difficult, so that the sound production mechanism has not yet been explained satisfactorily till now, and thus, most of the study is merely limited at the analysis of relevant experimental phenomena. In series of applications, the problem is considered merely based upon the experimental formula and the results and characteristic trends given by the experimental curves under specific and different conditions. As for actual requirements, the accurate predictions in terms of theory and sound wave features relevant to the calculation, such as frequency, intensity, sound field distribution, will be undoubtedly beneficial for the applications and control. Therefore, further study on the generation and features of the sound of the hydrodynamic sonic energy generator is the research direction deserving to be studied in depth. 9"

A part of the notes about "sonic energy" is cited from "*ultrasonics*" by Chongfu Ying; 7 is cited from Page 495, Chapter 7, Section 7.3; 8 is cited from Page 506, Chapter 7, Section 7.3.6; and 9 is cited from Page 506, Chapter 7, Section 7.3.6. *"Ultrasonics"* is published by China Science Press, [Beijing] Copyright Registration Number 092, First Edition: December, 1990; Second Printing: December, 1993.

## Claims

1. A seawater desalination system using a jet technique, comprising a filter apparatus, a sonic energy treatment apparatus, and a desalination apparatus, wherein the filter apparatus comprises: a seawater collecting port (1), connected to a seawater pump (2); the seawater bump (2), connected to a coarse filter apparatus (3); the coarse filter apparatus (3), with an outlet connected to an inlet of a fine filter apparatus (4); the fine filter apparatus (4), with an outlet connected to an sonic energy treatment apparatus (6); the last stage sonic energy treatment apparatus, connected to a small molecular cluster seawater storage tank (7); the water storage tank (7), connected to a reverse osmosis membrane (9) through a pump (8), and connected to a freshwater tank (10) by a pipeline.

2. The seawater desalination system using the jet technique as claimed in Claim 1, wherein the reverse osmosis membrane (9) is replaced by a distillatory.

3. The seawater desalination system using the jet technique as claimed in Claim 1, wherein the sonic energy treatment apparatus (6) is a combination of one-stage to multi-stage hydrodynamic sonic energy generator (11); a hydrodynamic sonic energy generator (11) is a metal chamber, comprising a middle chamber, and an upper and a lower axial chamber, wherein an upper and a lower end surface of the upper and the lower axial chambers have two coaxial outlets disposed at an axle center, and the middle chamber has inlets uniformly distributed thereon.

4. The seawater desalination system using the jet technique as claimed in Claim 1, wherein the middle chamber has 4-40 inlets distributed thereon.

5. The seawater desalination system using the jet technique as claimed in Claim I, wherein the inlets are inclined holes in the moving direction of the fluid, and an angle between an axis of the inlets and a tangent line of an excircle is 30°-90°.

6. The seawater desalination system using the jet technique as claimed in Claim 1, wherein an aperture ratio of the inlets to the outlets is in the range of 100:1 - 100:20.

7. The seawater desalination system using the jet technique as claimed in Claim 1, wherein the ratio of the root diameter of the upper axial chamber for the hydrodynamic sonic energy generator (11) to the diameter of the middle chamber is in the range of 1:1-1:5.
